Europäisches Patentamt

European Patent Office

Office européen des brevets

(11) Veröffentlichungsnummer: **0 208 266 B1**

(12) **EUROPÄISCHE PATENTSCHRIFT**

(45) Veröffentlichungstag der Patentschrift: **06.11.91**

(51) Int. Cl.5: **C09B 67/10**, C09B 5/62

(21) Anmeldenummer: **86109075.1**

(22) Anmeldetag: **03.07.86**

Die Akte enthält technische Angaben, die nach dem Eingang der Anmeldung eingereicht wurden und die nicht in dieser Patentschrift enthalten sind.

(54) **Verfahren zur Herstellung von Perylen-3,4,9,10-tetracarbonsäure-N,N'-dimethylimid in hochdeckender Pigmentform.**

(30) Priorität: **10.07.85 DE 3524535**

(43) Veröffentlichungstag der Anmeldung:
**14.01.87 Patentblatt 87/03**

(45) Bekanntmachung des Hinweises auf die Patenterteilung:
**06.11.91 Patentblatt 91/45**

(84) Benannte Vertragsstaaten:
**CH DE FR GB IT LI**

(56) Entgegenhaltungen:
**EP-A- 0 036 523**
**DE-C- 1 115 711**
**FR-A- 1 580 971**
**FR-A- 2 327 288**

(73) Patentinhaber: **HOECHST AKTIENGESELL-SCHAFT**
**Postfach 80 03 20**
**W-6230 Frankfurt am Main 80(DE)**

(72) Erfinder: **Spietschka, Ernst, Dr.**
**Am Rödchen 8**
**W-6270 Idstein(DE)**
Erfinder: **Urban, Manfred**
**Steigerwaldstrasse 2a**
**W-6200 Wiesbaden(DE)**

**Beschreibung**

Gegenstand der Erfindung ist ein Verfahren zur Herstellung von Perylen-3,4,9,10-tetracarbonsäure-N,N'-dimethylimid in hochdeckender Pigmentform, mit welchem nach Einarbeitung in Lacke hochdeckende, rote und reine Farbtöne erhalten werden.

Zur Erreichung von roten Unitönen von Lacken werden in der Praxis Kombinationen aus anorganischen Pigmenten (wie beispielsweise Eisenoxyd-Pigmente) und roten deckenden organischen Pigmenten benutzt. Aus wirtschaftlichen und coloristischen Gründen werden hierbei vom organischen Pigment höchste Deckkraft bei möglichst geringer Schichtdicke des Lackes, hervorragende rheologische Eigenschaften und möglichst reiner Farbton gefordert. Hinsichtlich Wetterechtheit werden selbstverständlich höchste Anforderungen gestellt.

Zur Herstellung von Perylen-3,4,9,10-tetracarbonsäure-N,N'-dimethylimid in Pigmentform sind folgende Verfahren bekannt: In der US-PS 4 018 791 ist ein Verfahren beschrieben, nach dem hochreine Pigmente erhalten werden, in dem man die Rohpigmente, beispielsweise das rohe Perylen-3,4,9,10-tetracarbonsäure-N,N'-dimethylimid, mit Schwefelsäure in das Sulfat überführt, dieses isoliert, daraus durch Hydrolyse das Reinprodukt freisetzt, letzteres abtrennt und das feuchte Rohpigment in einem flüssigen Medium mahlt. Nach der EP-PS 0 088 392 (US-PS 4 496 731) werden transparente Perylen-3,4,9,10-tetracarbonsäure-N,N'-dimethylimid-Pigmente, insbesondere für Metallic-Lacke, erhalten, indem man Perylen-3,4,9,10-tetracarbonsäuredianhydrid in wäßriger Suspension mit Methylamin zum Bis-(alkyl-ammonium)-salz des Perylen-3,4,9,10-tetracarbonsäure-bis-N-alkyl-amids umsetzt, letzteres durch Zugabe von Metallionen als schwerlösliches Metallsalz ausfällt und mit diesem die Ringschluß-Reaktion zum Perylen-3,4,9,10-tetracarbonsäure-N,N'-dimethylimid bei erhöhter Temperatur durchführt. Die bekannten Pigmentformierungsverfahren, wie sie in der US-PS 4 018 791 und EP-PS 0 088 392 (US-PS 4 496 731) beschrieben sind, führen zu Pigmenten, die bei der Applikation in Lacken transparente und farbstarke Färbungen ergeben und deshalb für den gewünschten Anwendungszweck nicht in Frage kommen.

Es wurde nun gefunden, daß man Perylen-3,4,9,10-tetracarbonsäure-N,N'-dimethylimid in hochdeckender Pigmentform und reinem roten Farbton herstellen kann, indem man ein in bekannter Weise hergestelltes feinteiliges, trockenes Präpigment des Perylen-3,4,9,10-tetracarbonsäure-N,N'-dimethylimids einer Kristallitgröße < 0.04 μm (400Å) mit einem im nachstehend genannten Behandlungstemperaturbereich flüssigen organischen Lösungsmittel aus der Reihe gesättigter aliphatischer bromierter, vorzugsweise chlorierter Kohlenwasserstoffe, wie Methylenchlorid, aromatischer Kohlenwasserstoffe, wie Toluol, Xylole oder 1,2,3-Trimethylbenzol (Hemimellitol), 1,2,4-Trimethylbenzol (Pseudocumol) oder 1,3,5-Trimethylbenzol (Mesitylen) oder aromatischer bromierter, vorzugsweise chlorierter Kohlenwasserstoffe, wie Chlorbenzol, o-Dichlorbenzol, 1,2,4-Trichlorbenzol oder Brombenzol in einer Mühle oder einem Dispergator bei Temperaturen von 0°C bis 100°C, vorzugsweise 20°C bis 30°C behandelt, anschließend das organische Lösungsmittel abdestilliert und das Pigment in üblicher Weise isoliert.

Die erfindungsgemäße Behandlung des Präpigments kann beispielsweise in kontinuierlichen oder diskontinuierlichen Rollmühlen, Schwingmühlen oder Rührwerkskugelmühlen erfolgen.

Die mit dem erfindungsgemäß erhaltenen Pigment hergestellten Lackierungen besitzen bei höchster Deckkraft kein Broncieren. Es war nicht vorhersehbar, daß feinteilige Präpigmente, die, wie weiter oben beschrieben, in hochtransparente Metallic-Pigmente überführt werden können, durch Behandeln mit organischen Lösungsmitteln der genannten Art in einer Mühle oder einem Dispergator, die normalerweise zur Zerkleinerung eingesetzt werden, in hochdeckende Pigmente überführt werden können. Dies ist umso überraschender als bei der Lösungsmittelbehandlung ohne Mühle oder Dispergator die erwünschte Deckkraft nicht erreicht wird und der Farbton des Pigments stark abtrübt.

Die Herstellung des trockenen, feinteiligen Präpigments des Perylen-3,4,9,10-tetracarbonsäure-N,N'-dimethylimids, welches verfahrensgemäß behandelt wird, kann beispielsweise nach den in der DE-OS 25 40 739 (GB-PS 1 463 141), DE-OS 27 27 484 (US-PS 4 189 582), DE-OS 21 53 087 (GB-PS 1 370 433), EP-PS 00 88 392 (US-PS 4 496 731) und DE-AS 23 16 536 (US-PS 3 976 649) beschriebenen Verfahren hergestellt werden.

Beispiel 1
——— —

30 g Perylen-3,4,9,10-tetracarbonsäuredianhydrid werden in 300 ml Wasser eingetragen. Nach Abkühlen auf 0 - 5°C läßt man innerhalb von 10 Minuten 47,1 g einer 42,5 %igen wäßrigen Monomethylaminlösung zutropfen. Dann rührt man 15 Minuten bei 0 - 5°C nach, läßt anschließend eine Lösung von 17 g Calciumchlorid in 56,6 ml Wasser zutropfen, rührt 1 Stunde bei 0 - 5°C nach, erhitzt 2 Stunden zum Sieden und läßt auf 50°C abkühlen. Anschließend stellt man durch Zugabe von 13,8 g Ameisensäure (98 %ig) auf pH 7 - 7,5 ein, saugt den Niederschlag ab, wäscht diesen chloridfrei und trocknet ihn bei 80°C.

Man erhält 32,2 g Perylen-3,4,9,10-tetracarbonsäure-N,N'-dimethylimid in Form des Präpigments. In einer 0,5 1-Rührwerkskugelmühle werden 380 ml Quarzperlen vom Durchmesser 1 mm vorgelegt. Dann gibt man 154 ml Chlorbenzol zu und trägt 20 g des wie vorstehend beschrieben hergestellten Präpigments ein. Man mahlt das Präpigment 1 Stunde bei 40° C, siebt dann von den Quarzperlen ab und destilliert die Pigmentsuspension mit Wasserdampf chlorbenzolfrei. Anschließend wird das Pigment abgesaugt und bei 80° C getrocknet.

Gewonnen werden 18,5 g Pigment, mit welchem nach der Einarbeitung in Lacke hochdeckende, rote und reine Farbtöne erhalten werden.

Beispiel 2

30 g Perylen-3,4,9,10-tetracarbonsäuredianhydrid werden in 300 ml Wasser eingetragen. Nach Abkühlen auf 0 - 5° C läßt man innerhalb von 10 Minuten 47,1 g einer 42,5 %igen wäßrigen Monomethylaminlösung zutropfen. Dann rührt man 15 Minuten bei 0 - 5° C nach, läßt anschließend eine Lösung von 17 g Calciumchlorid in 56,6 ml Wasser zutropfen, rührt 1 Stunde bei 0 - 5° C nach, erhitzt 2 Stunden zum Sieden und läßt auf 50° C abkühlen. Anschließend stellt man durch Zugabe von 13,8 g Ameisensäure (98 %ig) auf pH 7 - 7,5 ein, saugt den Niederschlag ab, wäscht diesen chloridfrei und trocknet ihn bei 80° C.

Man erhält 32,2 g Perylen-3,4,9,10-tetracarbonsäure-N,N'-dimethylimid in Form des Präpigments. In einer 0,5 1-Rührwerkskugelmühle werden 380 ml Quarzperlen vom Durchmesser 1 mm vorgelegt. Dann gibt man 154 ml Xylol zu und trägt 20 g des wie vorstehend beschrieben hergestellten Präpigments ein. Man mahlt das Präpigment 1 Stunde bei Raumtemperatur, siebt dann von den Quarzperlen ab und destilliert die Pigmentsuspension mit Wasserdampf xylolfrei. Anschließend wird das Pigment abgesaugt und bei 80° C getrocknet.

Gewonnen werden 18,6 g Pigment, mit welchem nach der Einarbeitung in Lacke hochdeckende, rote und reine Farbtöne erhalten werden.

Beispiel 3

30 g Perylen-3,4,9,10-tetracarbonsäuredianhydrid werden in 600 ml Wasser eingetragen. Nach Abkühlen auf 0 - 5° C läßt man innerhalb von 10 Minuten 47,1 g einer 42,5 %igen wäßrigen Monomethylaminlösung zutropfen. Dann rührt man 15 Minuten bei 0 - 5° C nach, läßt anschließend eine Lösung von 17 g Calciumchlorid in 56,6 ml Wasser zutropfen, rührt 1 Stunde bei 0 - 5° C nach, erhitzt 2 Stunden zum Sieden und läßt auf 50° C abkühlen. Anschließend stellt man durch Zugabe von 13,8 g Ameisensäure (98 %ig) auf pH 7 - 7,5 ein, saugt den Niederschlag ab, wäscht diesen chloridfrei und trocknet ihn bei 80° C.

Man erhält 32,4 g Perylen-3,4,9,10-tetracarbonsäure-N,N'-dimethylimid in Form des Präpigments. In einer 0,5 1-Rührwerkskugelmühle werden 380 ml Quarzperlen vom Durchmesser 1 mm vorgelegt. Dann gibt man 154 ml o-Dichlorbenzol zu und trägt 20 g des wie vorstehend beschrieben hergestellten Präpigments ein. Man mahlt das Präpigment in der Rührwerkskugelmühle 1 Stunde bei Raumtemperatur, siebt dann von den Quarzperlen ab und destilliert die Pigmentsuspension mit Wasserdampf o-dichlorbenzolfrei. Anschließend wird das Pigment abgesaugt und bei 80° C getrocknet.

Gewonnen werden 18,4 g Pigment, mit welchem nach der Einarbeitung in Lacke hochdeckende, rote und reine Farbtöne erhalten werden.

Beispiel 4

30 g Perylen-3,4,9,10-tetracarbonsäuredianhydrid werden in 300 ml Wasser eingetragen. Nach Abkühlen auf 0 - 5° C läßt man innerhalb von 10 Minuten 47,1 g einer 42,5 %igen wäßrigen Lösung von Monomethylamin zutropfen. Dann rührt man 15 Minuten bei 0 - 5° C nach, läßt anschließend eine Lösung vcn 17 g Calciumchlorid in 56,6 ml Wasser zutropfen, rührt 1 Stunde bei 0 - 5° C nach, erhitzt 2 Stunden zum Sieden und läßt auf 50° C abkühlen. Anschließend stellt man durch Zugabe von 13,8 g Ameisensäure (98 %ig) auf pH 7 - 7,5 ein, saugt den Niederschlag ab, wäscht diesen chloridfrei und trocknet ihn bei 80° C.

Man erhält 32,2 g Perylen-3,4,9,10-tetracarbonsäure-N,N'-dimethylimid in Form des Präpigments. In einer 1 1-Porzellanschwingmühle werden 1200 g Quarzperlen vom Durchmesser 2 mm vorgelegt. Dann gibt man 240 ml Xylol zu und trägt 30 g des wie vorstehend beschrieben hergestellten Präpigments ein. Man behandelt das Präpigment in der Schwingmühle 6 Stunden, siebt dann von den Quarzperlen ab und destilliert die Pigmentsuspension mit Wasserdampf xylolfrei. Anschließend wird das Pigment abgesaugt und bei 80° C getrocknet.

Gewonnen werden 28,2 g Pigment, mit welchem nach der Einarbeitung in Lacke hochdeckende, rote und reine Farbtöne erhalten werden.

**Patentansprüche**

1. Verfahren zur Herstellung von Perylen-3,4,9,10-tetracarbonsäure-N,N'-dimethylimid in hochdeckender Pigmentform und reinem roten Farbton, dadurch gekennzeichnet, daß man ein in bekannter Weise hergestelltes feinteiliges, trockenes Präpigment des Perylen-3,4,9,10-tetracarbonsäure-N,N'-dimethylimids einer Kristallitgröße < 0,04 μm (400 Å) mit einem im nachstehend genannten Behandlungstemperaturbereich flüssigen organischen Lösungsmittel aus der Reihe gesättigter aliphatischer bromierter oder chlorierter Kohlenwasserstoffe, aromatischer Kohlenwasserstoffe und aromatischer bromierter oder chlorierter Kohlenwasserstoffe in einer Mühle oder einem Dispergator bei Temperaturen von 0 °C bis 100 °C behandelt, anschließend das organische Lösungsmittel abdestilliert und das Perylen-3,4,9,10-tetracarbonsäure-N,N'-dimethylimid-Pigment isoliert.

2. Verfahren nach Anspruch 1, dadurch gekennzeichnet, daß man das Präpigment mit Methylenchlorid, Toluol, Xylolen, 1,2,3-Trimethylbenzol, 1,2,4-Trimethylbenzol, 1,3,5-Trimethylbenzol, Monochlorbenzol, o-Dichlorbenzol, 1,2,4-Trichlorbenzol oder Brombenzol behandelt.

3. Verfahren nach Anspruch 1, dadurch gekennzeichnet, daß man das Präpigment in einer kontinuierlichen oder diskontinuierlichen Rollmühle, Schwingmühle oder Rührwerkskugelmühle behandelt.

## Claims

1. A process for the preparation of perylene-3,4,9,10-tetracarboxylic acid N,N'-dimethylimide in a high-hiding pigmentary form and a pure red shade, wherein a finely divided, dry perylene-3,4,9,10-tetracarboxylic acid N,N'-dimethylimide prepigment which is prepared in a conventional manner and has a crystallite size of < 0.04 μm (400Å) is treated with an organic solvent which is liquid in the treatment temperature range stated below and is selected from the series comprising saturated aliphatic brominated or chlorinated hydrocarbons, aromatic hydrocarbons and aromatic brominated or chlorinated hydrocarbons, in a mill or a disperser at temperatures from 0 °C to 100 °C, the organic solvent is then distilled off and the perylene-3,4,9,10-tetracarboxylic acid N,N'-dimethylimide pigment is isolated.

2. A process as claimed in claim 1, wherein the prepigment is treated with methylene chloride, toluene, xylenes, 1,2,3-trimethylbenzene, 1,2,4-trimethylbenzene, 1,3,5-trimethylbenzene, monochlorobenzene, o-dichlorobenzene, 1,2,4-trichlorobenzene or bromobenzene.

3. A process as claimed in claim 1, wherein the prepigment is treated in a continuous or batchwise roll mill, vibratory mill or stirred ball mill.

## Revendications

1. Procédé pour préparer du N,N'-diméthylimide de l'acide pérylène-tétracarboxylique-3,4,9,10 sous forme de pigment à pouvoir couvrant élevé et ayant une nuance de teinte rouge pure, procédé caractérisé en ce qu'on traite dans un broyeur ou un appareil de dispersion, à des températures de 0 °C à 100 °C, un pré-pigment sec en fines particules, préparé de façon connue, de N,N'-diméthylimide de l'acide pérylène-tétracarboxylique-3,4,9,10 dont les cristallites ont une grosseur inférieure à 0,04 micromètre (400 Å), par un solvant organique liquide à la température de traitement précitée et choisie dans la série des hydrocarbures aliphatique saturés bromés ou chlorés, des hydrocarbures aromatiques et des hydrocarbures aromatiques bromés ou chlorés, puis on chasse par distillation le solvant organique et l'on isole le pigment à base de N,N'-diméthylimide de l'acide pérylène-tétracarboxylique-3,4,9,10.

2. Procédé selon la revendication 1, caractérisé en ce qu'on traite le pré-pigment avec du chlorure de méthylène, du toluène, des xylènes, le triméthyl-1,2,3-benzène, le triméthyl-1,2,4 benzène, le triméthyl-1,3,5 benzène, du monochlorobenzène, de l'o-dichlorobenzène, le trichloro-1,2,4 benzène ou du bromobenzène.

3. Procédé selon la revendication 1, caractérisé en ce qu'on traite le pré-pigment dans un broyeur à rouleaux, un broyeur oscillant ou un broyeur à billes comportant un dispositif d'agitation, fonctionnant de façon continue ou discontinue.